# FASCICULE DE BREVET EUROPEEN

(11) **EP 0 320 412 B1**
(45) Date de publication et mention de la délivrance du brevet: **10.02.1993**
(21) Numéro de dépôt: 88420403.3
(22) Date de dépôt: 01.12.1988
(51) Int. Cl.: H01H 71/02, H02B 13/00

(54) **Disjoncteur multipolaire de calibre élevé constitué par deux boîtiers moulés accolés**
Mehrpoliger Schalter für höheren Strombereich bestehend aus zwei verbundenen formgepressten Gehäusen
High caliber multipole breaker made of two attached mould cases

(30) Priorité: 10.12.1987 FR 8717447
(43) Date de publication de la demande: 14.06.1989
(73) Titulaire: MERLIN GERIN, F-38050 Grenoble Cédex (FR)
(72) Inventeur: Baginski, Pierre, F-38050 Grenoble Cedex (FR); Nebon, Jean-Pierre, F-38050 Grenoble Cedex (FR); Bur, Marc, F-38050 Grenoble Cedex (FR)
(74) Mandataire: Jouvray, Marie-Andrée

(56) Documents cités:
- EP-A- 0 090 176
- EP-A- 0 180 537
- DE-B- 1 181 770
- US-A- 4 197 519

## Description

L'invention concerne un disjoncteur multipolaire basse tension, pour fortes intensités, comportant une pluralité de pôles juxtaposés à l'intérieur d'un boîtier moulé isolant dont les parois latérales comportent des dépouilles, chaque pôle comportant une paire de contacts séparables, une chambre d'extinction d'arc et une paire de plages de contact connectées aux contacts séparables et faisant saillie vers l'extérieur du boîtier, les plages de contact étant connectées à des barrettes de raccordement destinées à être raccordées respectivement aux phases d'un réseau à protéger.

Le calibre d'un disjoncteur de ce type est, pour un boîtier de dimension prédéterminée, déterminé par le choix des pôles, c'est à dire essentiellement par les dimensions de la cuivrerie associée au pôle.

L'invention a pour objet l'élargissement d'une gamme de disjoncteurs de manière à former, à partir d'un boîtier moulé standard, un disjoncteur de calibre supérieur à celui des pôles standards individuels qui le composent, ce but devant être atteint avec un nombre minimal de modifications.

Le disjoncteur selon l'invention est caractérisé en ce qu'il est constitué par deux boîtiers multipolaires standards accolés, comportant en commun un barreau de commande des pôles, un mécanisme de commande dudit barreau, et un déclencheur électronique actionnant ledit mécanisme, une entretoise étant fixée aux parois latérales opposées des deux boîtiers, de la résine, coulée à froid entre lesdites parois latérales opposées assurant la fixation des deux boîtiers, et au moins une des barrettes de raccordement étant connectée à au moins deux pôles jumelés adjacents, disposés électriquement en parallèle.

Par l'accolement de deux boîtiers tripolaires standards, il est ainsi possible, en jumelant les pôles deux à deux, de doubler le calibre du disjoncteur par rapport à celui d'un des pôles individuels qui le composent.

L'invention est particulièrement intéressante pour les disjoncteurs de fort calibre, produits en petite quantité, et pour lesquels il ne serait pas rentable de concevoir un boîtier spécial de dimensions adaptées au calibre.

La largeur d'un disjoncteur obtenu par l'accolement de deux boîtiers moulés multipolaires standards peut atteindre un mètre. Il est donc particulièrement important que la liaison entre les boîtiers soit solide.

En raison de la présence de dépouilles prononcées sur les parois latérales des boîtiers standards une liaison purement mécanique, au moyen d'une cale boulonnée par exemple, nécessiterait un usinage complexe. Par contre l'utilisation de résine coulée à froid qui épouse la forme des parois et compense toutes les irrégularités, selon l'invention, tire au contraire profit de l'existence de ces dépouilles et permet d'obtenir une fixation satisfaisante des boîtiers à un coût raisonnable.

Selon un mode de réalisation préféré, chaque boîtier standard est constitué par l'assemblage d'un boîtier intermédiaire, d'un boîtier arrière et d'un couvercle, la face avant du boîtier intermédiaire divisant le boîtier en un compartiment antérieur délimité par ladite face et le couvercle, et en un compartiment postérieur destiné au logement des pôles, et l'entretoise est fixée à la partie inférieure des parois latérales opposées des boîtiers intermédiaires des deux boîtiers standards à accoler, la résine remplissant l'espace restant entre les deux boîtiers intermédiaires, le déclencheur électronique et le mécanisme de commande du barreau, communs, étant disposés dans le compartiment antérieur de l'un des boîtiers standards.

Le disjoncteur étant du type embrochable dans un châssis fixe comportant un arbre rotatif solidaire d'au moins deux cames d'embrochage latérales destinées à l'entraînement du disjoncteur au cours de l'embrochage, l'entretoise comporte un galet destiné à coopérer, lors de l'embrochage du disjoncteur sur le châssis, avec une came d'embrochage centrale solidaire dudit arbre.

D'autres avantages et caractéristiques ressortiront plus clairement de la description qui va suivre de différents modes de réalisation de l'invention, donnés à titre d'exemples non limitatifs et représentés aux dessins annexés, sur lesquels:
- la figure 1 est une vue éclatée, en perspective, d'un disjoncteur selon l'invention, sur laquelle une seule chambre d'extinction d'arc est représentée;
- la figure 2 est une vue en perspective de deux boîtiers intermédiaires standards destinés à être accolés;

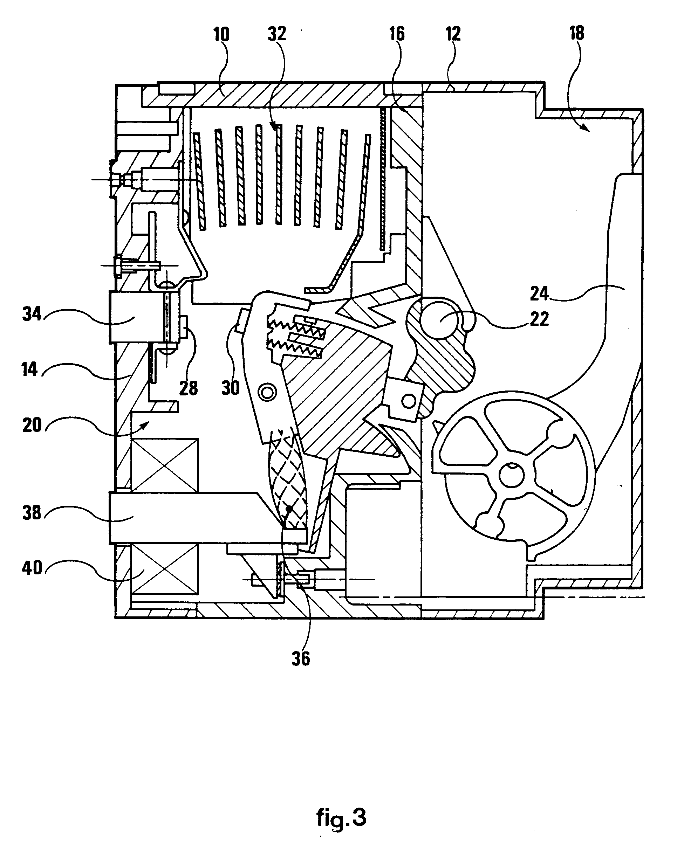

- la figure 3 est une vue en coupe longitudinale d'un pôle du disjoncteur selon la figure 1, représenté en position d'ouverture des contacts;
- la figure 4 est une vue schématique de face, du compartiment postérieur du disjoncteur, en position embrochée sur un châssis;
- la figure 5 représente, en perspective, un châssis destiné à l'embrochage d'un disjoncteur selon l'invention;
- la figure 6 est une vue de dessus schématique d'un mode de réalisation d'un disjoncteur selon l'invention, en position embrochée sur un châssis représenté en coupe;
- les figures 7, 8 et 10 représentent en vue arrière, en perspective, la partie supérieure de trois modes de réalisation différents d'un disjoncteur selon l'invention; et
- la figure 9 illustre un ensemble capteur de courant utilisé dans un disjoncteur selon l'invention.

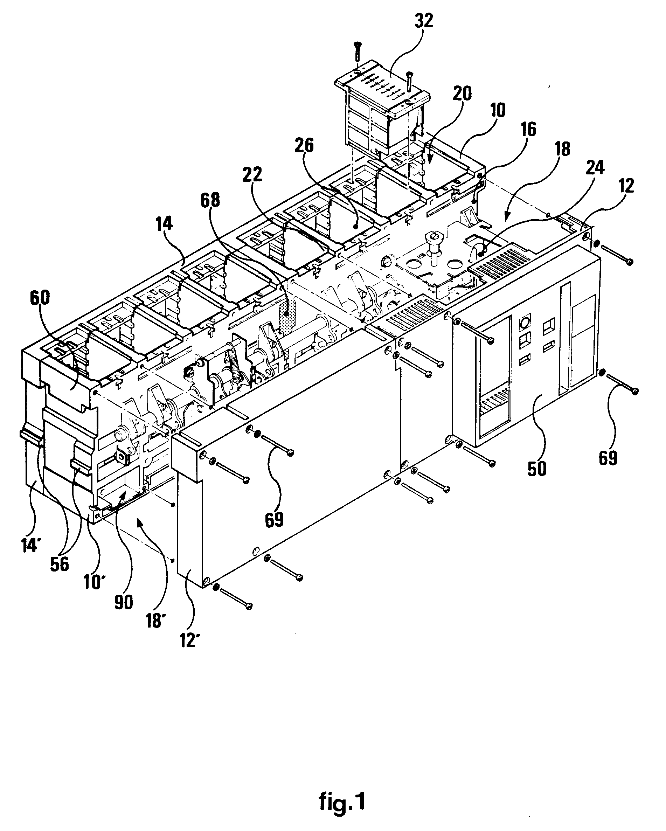

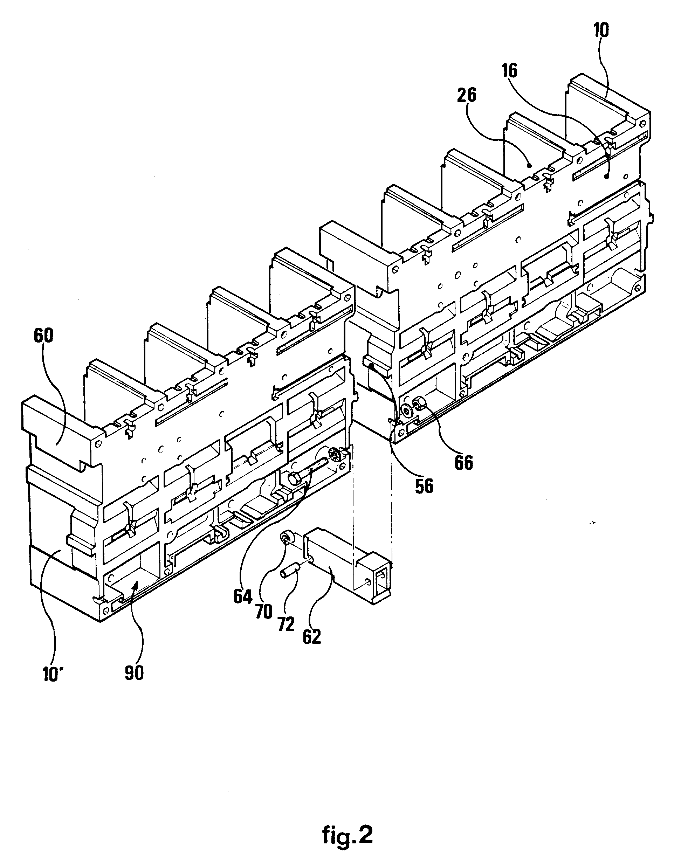

Un disjoncteur multipolaire basse-tension, de type connu, (partie droite de la figure 1), comporte une pluralité de pôles juxtaposés disposés à l'intérieur d'un boîtier moulé en matériau isolant. Le boîtier, parallélépipèdique, est constitué par l'assemblage d'un boîtier intermédiaire 10 (figure 2), d'un couvercle 12 et d'un boîtier arrière 14. La face avant 16 du boîtier intermédiaire 10 divise le boîtier en un compartiment antérieur 18, délimité par cette face et par le couvercle 12, et en un compartiment postérieur 20 destiné au logement des pôles et isolé électriquement du compartiment antérieur.

Le compartiment antérieur 18 renferme un mécanisme (non représenté) de commande agissant sur un barreau transversal de commutation 22, commun à tous les pôles. Un levier 24 d'armement du mécanisme de commande, un déclencheur électronique (non représenté) provoquant un déclenchement automatique lors de l'apparition d'un courant de défaut, et des auxiliaires électriques de mesure, de signalisation et de contrôle (non représentés) sont également logés dans le compartiment antérieur 18.

Le compartiment postérieur 20 est subdivisé longitudinalement en compartiments élémentaires de logement des pôles par des parois 26 isolantes de séparation des pôles. Chaque pôle du compartiment postérieur comporte une paire de contacts 28,30, séparables et une chambre 32 d'extinction d'arc amovible. Le contact fixe 28 est porté directement par une première plage de contact 34 faisant légèrement saillie vers l'extérieur de la face arrière du boîtier arrière 14. Le contact mobile 30 est connecté par un conducteur souple 36 (tresse) à une seconde plage de contact 38, faisant également saillie vers l'extérieur de la face arrière du boîtier arrière 14. Un transformateur de courant 40 est disposé autour de l'une des plages de contact, de manière à fournir au déclencheur une mesure de courant traversant le pôle correspondant.

L'agencement interne et le fonctionnement d'un disjoncteur de ce type est connu et l'on se reportera avantageusement aux brevets français n° 2589624 et 2589625 pour une description plus détaillée.

Un tel disjoncteur est de préférence conçu de manière à être débrochable, c'est à dire à être destiné à venir s'embrocher dans un chassis fixe 42 portant, sur sa face arrière, deux rangées superposées de plages fixes de raccordement 44 destinées à être connectées respectivement aux deux rangées superposées de plages de contact 34,38 par l'intermédiaire de pinces de raccordement 46 constituées chacune par une pluralité de doigts 48 de contacts élémentaires juxtaposés. Les brevets français 2583217 et 2594265 décrivent respectivement des modes de réalisation particuliers de pinces de raccordement et d'un mécanisme d'embrochage et de débrochage d'un disjoncteur débrochable de ce type.

Un gamme de disjoncteurs connus de ce type comporte deux modèles standards de boîtiers moulés, tripolaire et tétrapolaire, dont le calibre, de 800A à 3200A, est déterminé par le choix des pôles, c'est à dire essentiellement par les dimensions des plages de contact 34,38 solidaires du boîtier, des pinces 46 et des plages 44 de raccordement solidaires du châssis dans le cas d'un disjoncteur débrochable. Les transformateurs de courant 40 ont également un calibre adapté au calibre du disjoncteur.

Le boîtier du disjoncteur selon l'invention, représenté sur la figure 1, est constitué par l'accolement de deux boîtiers standards (10,12,14 et 10′,12′,14′), tripolaires ou tétrapolaires, de type connu, le mécanisme de commande, le déclencheur électronique et les auxiliaires électriques, disposés dans le compartiment antérieur 18 de l'un des boîtiers (10,12,14) étant communs aux deux boîtiers et le barreau de commutation 22, commandé par le mécanisme de commande, étant prolongé dans le compartiment antérieur 18' de l'autre boîtier (10′,12′,14′), de manière à être commun à l'ensemble des pôles du disjoncteur.

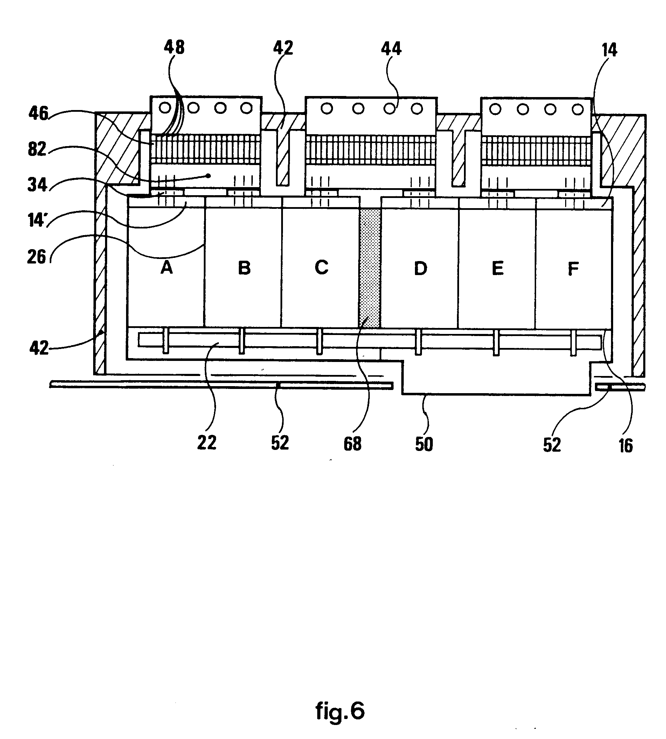

Le couvercle 12' du boîtier qui ne comporte pas les éléments de commande communs peut étre simplifié par rapport au couvercle 12 standard, qui comporte une partie 50 en saillie, comme représenté sur la figure 1. De cette manière, si les parties des couvercles 12 et 12' qui ne sont pas en saillie sont cachées par une porte, montée sur la face avant du châssis, schématisée en 52 sur la figure 6, la face avant du disjoncteur selon l'invention a, pour l'usager, la même apparence que la face avant d'un disjoncteur standard.

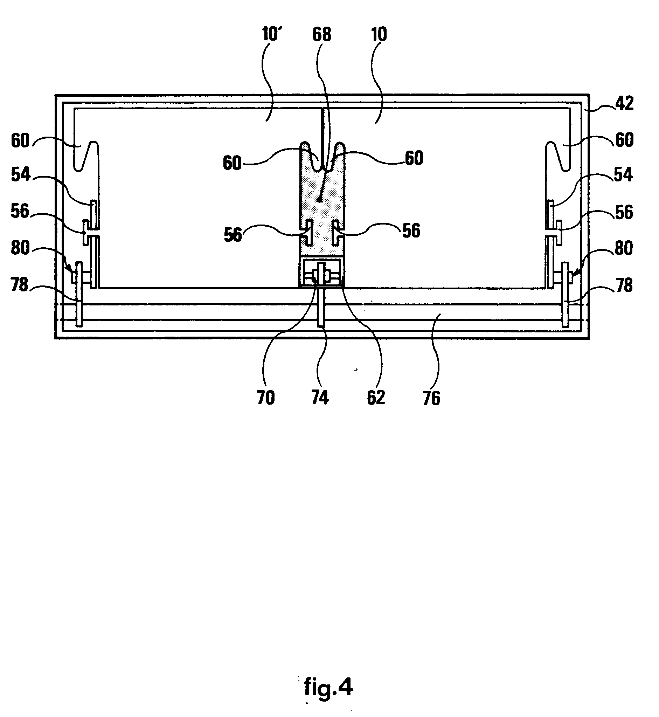

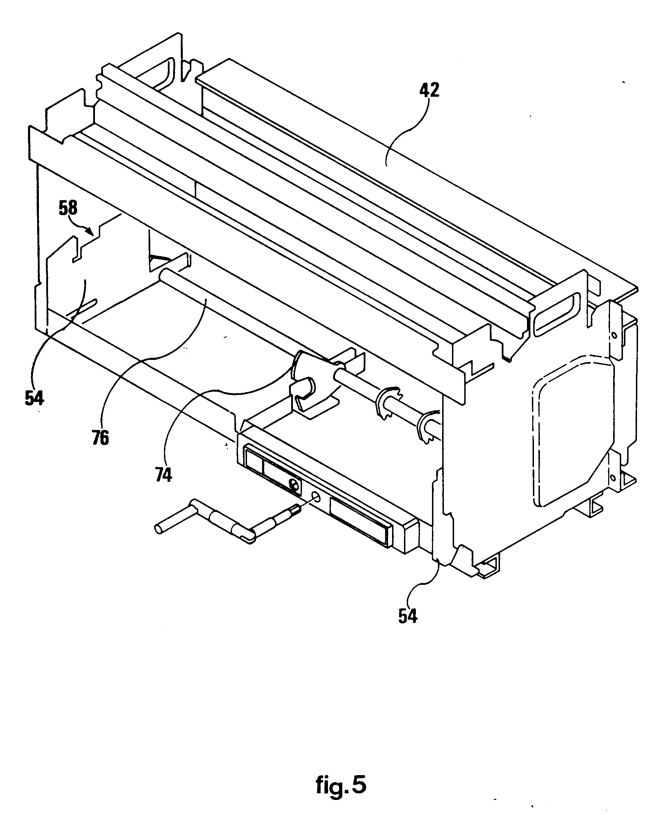

Les parois latérales du boîtier intermédiaire 10 et du boîtier arrière 14 d'un boîtier standard comportent de nombreuses dépouilles et aspérités. En effet, ce boîtier est normalement destiné à être embroché dans un châssis fixe 42 par l'intermédiaire de flasques latéraux de support 54, schématisés sur les figures 4 et 5, mobiles à l'intérieur du châssis. Les parois latérales des boîtiers 10 et 14 comportent des organes d'accrochage 56 destinés à coopérer avec des encoches de positionnement 58 prévues dans la partie supérieure des flasques de support 54. Des rebords 60 de préhension, utilisés notamment pour soulever le boîtier pour le placer sur les flasques de support 54, sont également prévus sur les parois latérales du boîtier intermédiaire 10.

La présence de ces dépouilles et aspérités est mise à profit pour la fixation des deux boîtiers l'un à l'autre. Une entretoise 62 est tout d'abord disposée entre les parois latérales opposées des boîtiers intermédiaires 10,10', dans la partie inférieure de celles-ci (figure 2 et 4). L'entretoise est fixée à ces parois latérales par tous moyens de fixation appropriés, par exemple au moyen de vis 64 et de boulons 66. L'espace compris entre les boîtiers 10 et 10' et des gabarits (non représentés) provisoirement disposés de part et d'autre des faces avant 16 et arrière des boîtiers, est rempli avec de la résine, coulée à froid. La résine 68 épouse alors la forme des parois latérales opposés des boîtiers. Ainsi, après durcissement de la résine et retrait des gabarits, les deux botiers 10 et 10' sont solidement fixés l'un à l'autre, les dépouilles et aspérités des parois latérales assurant un bon ancrage de la résine sur ces parois. Les boîtiers arrières 14 et 14′, ainsi que les couvercles 12 et 12′ sont ensuite fixés aux boîtiers accolés par des vis 69.

L'entretoise 62 a sensiblement la forme d'un U ouvert à sa partie inférieure, dans lequel un galet 70 est fixé transversalement par un axe 72. Le galet 70 est destiné à coopérer avec une came d'embrochage 74 rotative fixée sur un arbre rotatif 76 disposé transversalement dans le châssis 42 dans lequel le boîtier du disjoncteur est destiné à être embroché (figures 4 et 5). L'arbre rotatif 76 est entrainé en rotation par tout dispositif approprié, par exemple par un dispositif à crémaillère du type décrit dans le brevet français 2594265 précité. Comme décrit dans ce brevet, il comporte deux cames d'embrochage latérales 78 venant s'engager sur des galets d'accouplement 80 solidaires des flasques de support 54.

Le boîtier selon l'invention, lorsqu'il est embroché dans un châssis 42, est donc supporté latéralement, de manière connue, par les flasques de support 54 comportant des galets 80 sur lesquels viennent s'engager des cames d'embrochage latérales 78. De plus, il est maintenu dans sa partie centrale par l'engagement d'une came centrale additionnelle 74 venant s'engager sur le galet 70 de l'entretoise 62. L'entretoise remplit ainsi une double fonction de définition de l'écartement entre les deux boîtiers standards et d'entraînement du boîtier lors de l'embrochage du boîtier dans un châssis 42, grâce à la coopération d'un galet 70 solidaire de l'entretoise et d'une came d'embrochage 74.

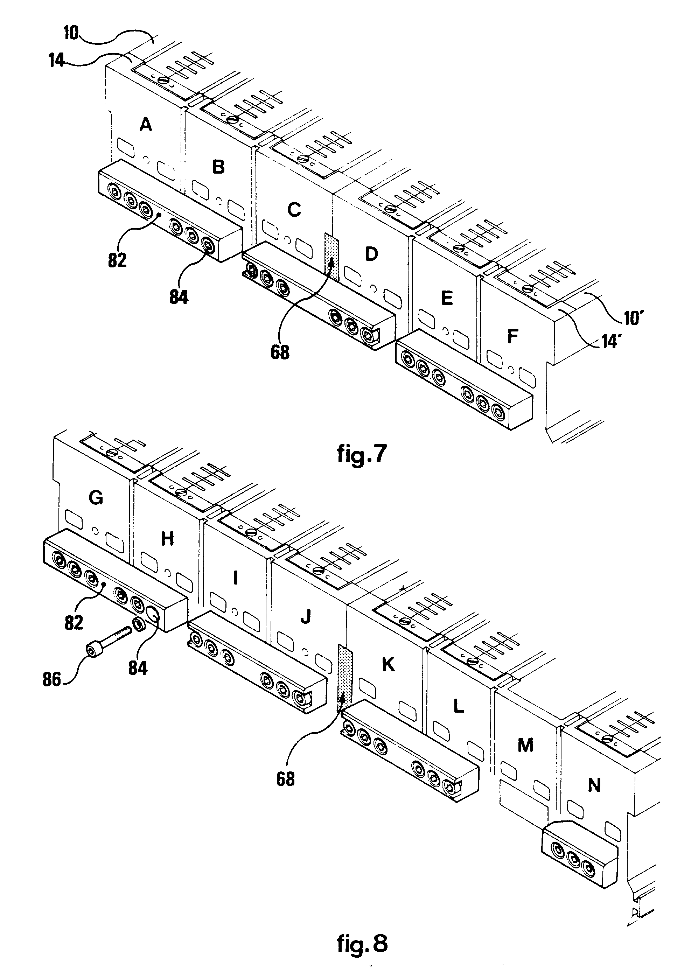

Les figures 6 et 7 illustrent un disjoncteur constitué par deux boîtiers tripolaires accolés. Un tel boîtier comporte donc six compartiments élémentaires de logement de pôles individuels standards A,B,C,D,E et F.

Pour former un disjoncteur tripolaire, les pôles sont jumelés deux par deux, (A et B, C et D, E et F), c'est à dire mis électriquement en parallèle, pour former l'un des pôles du disjoncteur. Pour celà, les plages de contacts 34 ou 38 respectivement, de deux pôles adjacents jumelés sont fixées à une barrette de raccordement commune 82, destinée à venir s'embrocher sur une pince de raccordement 46, de même largeur, elle-même connectée à une plage fixe de raccordement 44, également de même largeur, lors de l'embrochage du disjoncteur dans un châssis 42.

Chaque plage de contact comporte des trous taraudés, dont seuls les axes sont représentés sur la figure 6, débouchant sur sa face arrière et venant en regard d'orifices 84 traversant la barrette associée de manière à permettre la fixation de la barrette sur la plage de contact au moyen de vis 86.

Il est à noter que la barrette de raccordement 82 centrale fixée aux pôles C et D, c'est à dire reliée à un pôle de chacun des boîtiers standards, renforce encore la liaison entre les deux boîtiers, à la partie arrière de ceux-ci.

A titre d'exemple non limitatif, si chacun des pôles individuels standards A,B,C,D,E et F a un calibre de 3200A, le disjoncteur tripolaire représenté sur les figures 6 et 7 est un disjoncteur de calibre 5000A.

La figure 8 illustre un disjoncteur tétrapolaire constitué par deux boîtiers tétrapolaires accolés, c'est à dire réalisé à partir de 8 compartiments élémentaires G,H,I,J,K,L,M et N, destinés au logement des pôles standards individuels. Comme dans le mode de réalisation de la figure 7, chacune des trois phases du réseau est respectivement associée à deux pôles adjacents jumelés, G et H, I et J, K et L. Le neutre est, quant à lui associé à un des pôles extrèmes N et séparé des autres pôles par un compartiment élémentaire inutilisé M. Chacun des pôles individuels étant prévu pour un calibre de 3200A, on peut ainsi réaliser un disjoncteur tétrapolaire de calibre 5000A. Le courant parcourant normalement le neutre étant inférieur à celui parcourant les autres phases du réseau, il est inutile de prévoir un jumelage de pôles pour le neutre. Par contre, pour des raisons d'isolation, il est préférable de séparer le pôle associé au neutre des autres pôles et d'intercaler le compartiment élémentaire inutilisé M entre eux.

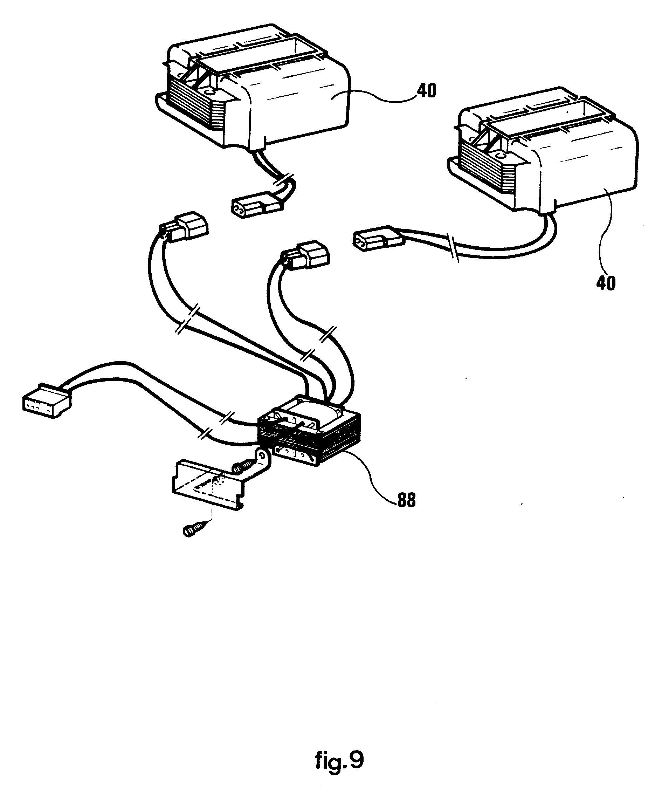

Bien entendu, les transformateurs de courant 40 sont également adaptés au calibre du disjoncteur. A titre d'exemple, pour un disjoncteur tripolaire de calibre 5000A, représenté sur les figures 6 et 7, les transformateurs de courant de deux pôles jumelés sont prévus chacun pour un courant nominal de 3200A, un transformateur-sommateur 88 (figure 9) recevant les signaux de sortie des deux transformateurs et fournissant au déclencheur la somme de ces signaux.

Dans un mode de réalisation préféré, un transformateur-réducteur est interposé entre chacun des transformateurs de courant et le déclencheur, le transformateur-sommateur 88 servant également de réducteur aux deux transformateurs de courant de pôles jumelés. Tandis que les signaux de sortie des transformateurs de courant 40 sont de l'ordre de 1A, les signaux de sortie des transformateurs-réducteurs appliqués au déclencheur, sont de l'ordre de 100mA. Les transformateurs-réducteurs et le transformateur-sommateur-réducteur sont de préférence disposés dans le compartiment antérieur 18, dans des alvéoles 90 prévues dans la face avant 16 du boîtier intermédiaire 10 (figures 1 et 2).

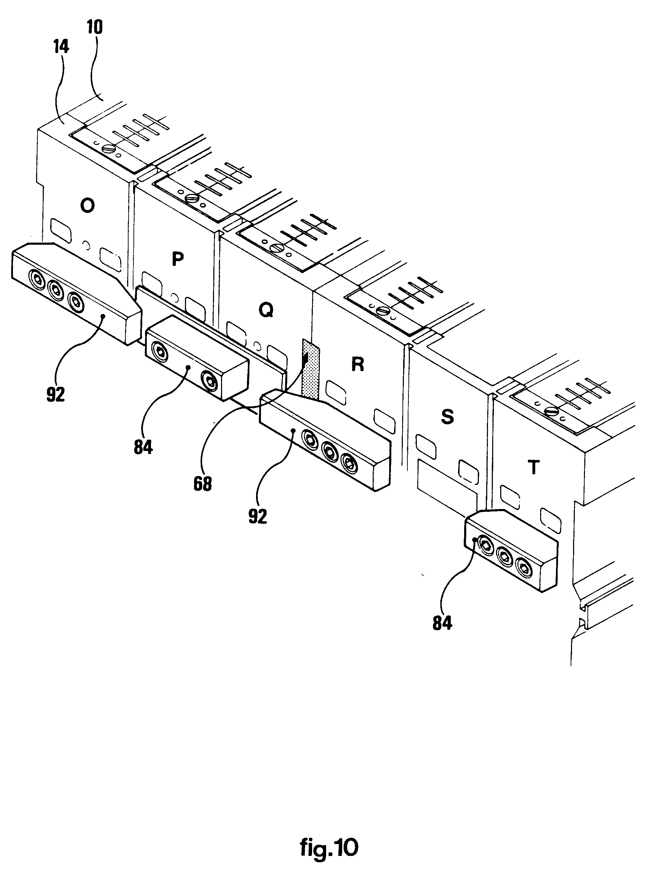

La présente invention n'est pas limitée à un disjoncteur, constitué par deux boîtiers accolés, dans lesquels chacune des phases du réseau est associée à des pôles jumelés. L'accolement de deux boîtiers selon l'invention peut également être utilisé pour réaliser un disjoncteur multipolaire, dont au moins deux pôles adjacents sont jumelés, les barrettes de raccordement des autres pôles étant élargies de manière à chevaucher le pôle jumelé immédiatement adjacent, de manière à obtenir un disjoncteur de calibre supérieur au calibre des pôles individuels qui le composent. La demande de brevet français No. 8717446, déposée le 10.12.1987, décrit plusieurs modes particuliers de réalisation de tels disjoncteurs, notamment un disjoncteur tétrapolaire de calibre 4000A constitué par deux boîtiers tripolaires accolés comportant six compartiments élémentaires juxtaposés (O,P,Q,R,S,T) destinés au logement de cinq pôles standards individuels prévus pour un calibre de 3200A et dans lequel deux pôles centraux (P,Q) sont jumelés, deux autres pôles (O,R), associés aux deux autres phases du réseau comportant des barrettes de raccordement 92 élargies, le pôle neutre (T) étant séparé des autres pôles par un compartiment élémentaire inutilisé (S) (figure 10). De même, en accolant deux boîtiers tétrapolaires dont chacun des pôles individuels est conçu pour un calibre de 3200A, il est possible de réaliser, un disjoncteur tripolaire de calibre 8000A (non représenté). Pour celà, deux pôles latéraux adjacents sont jumelés et comportent une barrette de raccordement élargie, c'est à dire dont la largeur est supérieure à la largeur des deux pôles jumelés. Il en est de même des deux pôles latéraux adjacents opposés. Trois des pôles centraux sont connectés en parallèle, le compartiment élémentaire restant étant inutilisé. Le calibre de ce disjoncteur est alors supérieur au calibre de 2 pôles standards mis en parallèle.

## Revendications

1. Disjoncteur multipolaire basse tension, pour fortes intensités, comportant une pluralité de pôles juxtaposés à l'intérieur d'un boîtier moulé isolant dont les parois latérales extérieurs comportent des dépouilles (56,60), chaque pôle comportant une paire de contacts séparables (28,30), une chambre (32) d'extinction d'arc et une paire de plages de contact (34,38) connectées aux contacts séparables et faisant saillie vers l'extérieur du boîtier, les plages de contact (34,38) étant connectées à des barrettes (82) de raccordement destinées à être raccordées respectivement aux phases d'un réseau à protéger, disjoncteur caractérisé en ce qu'il est constitué par deux boîtiers multipolaires standards (10,12, 14 et 10′, 12′, 14′) accolés, comportant en commun un barreau (22) de commande des pôles, un mécanisme de commande dudit barreau, et un déclencheur électronique actionnant ledit mécanisme, une entretoise (62) étant fixée aux parois latérales opposées des deux boîtiers, de la résine (68), coulée à froid entre lesdites parois latérales opposées assurant la fixation des deux boîtiers, et au moins une des barrettes de raccordement (82) étant connectée à au moins deux pôles jumelés adjacents, disposés électriquement en parallèle.

2. Disjoncteur selon la revendication 1, caractérisé en ce que chaque boîtier standard est constitué par l'assemblage d'un boîtier intermédiaire (10), d'un boîtier arrière (14) et d'un couvercle (12), la face avant (16) du boîtier intermédiaire (10) divisant le boîtier en un compartiment antérieur (18) délimité par ladite face (16) et le couvercle (12) et en un compartiment postérieur (20) destiné au logement des pôles, et en ce que l'entretoise (62) est fixée à la partie inférieure des parois latérales opposées des boîtiers intermédiaires (10,10′) des deux boîtiers standards à accoler, la résine (68) remplissant l'espace restant entre les deux boîtiers intermédiaires (10,10'), déclencheur électronique et le mécanisme de commande du barreau, communs, étant disposés dans le compartiment antérieur de l'un des boîtiers standards.

3. Disjoncteur selon l'une des revendications 1 et 2, caractérisé en ce que l'entretoise (62) est fixée par des vis (64) auxdites parois latérales.

4. Disjoncteur selon l'une quelconque des revendications 1 à 3, caractérisé en ce que, le disjoncteur étant du type embrochable dans un châssis fixe (42) comportant un arbre rotatif (76) solidaire d'au moins deux cames d'embrochage latérales (78) destinées à l'entraînement du disjoncteur au cours de l'embrochage, l'entretoise (62) comporte un galet (70) destiné à coopérer, lors de l'embrochage du disjoncteur sur le châssis, avec une came d'embrochage centrale (74) solidaire dudit arbre (76).

5. Disjoncteur selon l'une quelconque des revendications 1 à 4, caractérisé en ce que chacune des barrettes de raccordement (82) destinée à être raccordée à une phase du réseau est connectée à deux pôles jumelés associés (A et B, C et D, E et F).

## Claims

1. A low-voltage multipole circuit breaker, for high current intensities, comprising a plurality of poles juxtaposed inside an insulating molded case whose outer side walls comprise reliefs (56, 60), each pole comprising a pair of separable contacts (28, 30), an arc chute (32) and a pair of contact terminal pads (34, 38) connected to the separable contacts and protruding outwards from the case, the contact terminal pads (34, 38) being connected to connecting strips (82) designed to be connected respectively to the phases of a mains system to be protected, a circuit breaker characterized in that it is formed by two adjoined standard multipole cases (10, 12, 14 and 10', 12' 14'), comprising in common an operating bar (22) of the poles, an operating mechanism of said bar, and an electronic trip device actuating said mechanism, a spacer (62) being fixed to the opposite side walls of the two cases, resin (68) cold-cast between said opposite side walls providing fixing of the two cases, and at least one of the connecting strips (82) being connected to at least two adjacent twinned poles, electrically arranged in parallel.

2. The circuit breaker according to claim 1, characterized in that each standard case is formed by assembly of an intermediate case (10), a rear case (14) and a cover (12), the front face (16) of the intermediate case (10) dividing the case into a front compartment (18), bounded by said face (16) and the cover (12), and a rear compartment (20) designed to house the poles, and that the spacer (62) is fixed to the bottom part of the opposite side walls of the intermediate cases (10, 10') of the two standard cases to be adjoined, the resin (68) filling the space remaining between the two intermediate cases (10, 10'), the common electronic trip device and bar operating mechanism being housed in the front compartment of one of the standard cases.

3. The circuit breaker according to one of the claims 1 or 2, characterized in that the spacer (62) is fixed by bolts (64) to said side walls.

4. The circuit breaker according to any one of the claims 1 to 3, characterized in that the circuit breaker being of the draw-in type in a fixed frame (42) comprising a rotating shaft (76) securedly united to at least two lateral racking cams (78) designed to drive the circuit breaker in the course of racking-in, the spacer (62) comprises a roller (70) designed to cooperate, when the circuit breaker is drawn into the frame, with a central racking cam (74) securedly fixed to said shaft (76).

5. The circuit breaker according to any one of the claims 1 to 4, characterized in that each of the connecting strips (82) designed to be connected to a phase of the mains system is connected to two associated twinned poles (A and B, C and D, E and F).

## Patentansprüche

1. Niederspannungs-Mehrpol-Leistungsschalter für hohe Nennströme, bestehend aus mehreren nebeneinander angeordneten Polen in einem Isolierstoffgehäuse, dessen seitliche Außenwände mit Führungsprofilen (56, 60) versehen sind, wobei jeder Pol ein trennbares Kontaktpaar (28, 30), eine Lichtbogenlöschkammer (32) sowie zwei mit den trennbaren Kontakten verbundene und durch die Gehäusewand nach außen geführte Anschlüsse (34, 38) umfaßt und diese Anschlüsse (28, 30) mit Klemmleisten (82) zum Anschluß der entsprechenden Phasenleiter eines zu schützenden Netzes verbunden sind, dadurch gekennzeichnet, daß dieser Leistungsschalter aus zwei aneinandergereihten Mehrpol-Standardgehäusen (10, 12, 14 und 10', 12', 14') besteht, die eine gemeinsame Schaltstange (22) zur Betätigung der Pole, einen Antriebsmechanismus für diese Schaltstange und einen auf den genannten Mechanismus wirkenden elektronischen Auslöser enthalten, wobei zwischen den beiden gegenüberliegenden Seitenwänden der beiden Gehäuse ein Zwisehenstück befestigt ist, die gegenseitige Befestigung der beiden Gehäuse durch ein zwischen die beiden genannten Seitenwände kalt eingespritztes Gießharz (68) gewährleistet wird und mindestens eine Klemmleiste (82) an mindestens zwei benachbarte, elektrisch parallelgeschaltete Poleinheiten angeschlossen ist.

2. Leistungsschalter nach Anspruch 1, dadurch gekennzeichnet, daß sich jedes Standardgehäuse aus einem Zwischenteil (10), einem Rückwandteil (14) und einer Frontabdeckung (12) zusammensetzt, wobei die Frontseite (16) des Zwischenteils (10) das Gehäuse in ein durch die genannte Frontseite (16) und die Abdeckung (12) begrenztes vorderes Schalterabteil (18) sowie ein zur Aufnahme der Polstücke dienendes hinteres Schalterabteil (20) unterteilt, daß das Zwischenstück (62) im unteren Bereich der gegenüberliegenden Seitenwände der Zwischenteile (10, 10') der beiden zu verbindenden Standardgehäuse befestigt ist und der zwischen den beiden Gehäuse-Zwischenteilen (10, 10') verbleibende Raum vom Gießharz (68) ausgefüllt wird, wobei der elektronische Auslöser und der Antriebsmechanismus der Schaltstange im vorderen Schalterabteil eines der Standardgehäuse angeordnet werden.

3. Leistungsschalter nach Anspruch 1 oder 2, dadurch gekennzeichnet, daß das Zwischenstück (62) mit Hilfe von Schrauben (64) an den genannten Seitenwänden befestigt wird.

4. Leistungsschalter nach einem der Ansprüche 1 bis 3, dadurch gekennzeichnet, daß der Schalter in Einschubtechnik mit feststehendem Chassis (42) ausgeführt ist, in dem eine Welle (76) mit mindestens zwei seitlich an ihr befestigten Einschub-Kurvenscheiben (78) zur Mitführung des Schalters angeordnet ist, und das Zwischenstück (62) eine Rolle (70) aufweist, die beim Einfahren des Schalters in das Chassis mit einer mittig auf der genannten Welle (76) befestigten Kurvenscheibe (74) zusammenwirkt.

5. Leistungsschalter nach einem der Ansprüche 1 bis 4, dadurch gekennzeichnet, daß jede Klemmleiste (82) zum Anschluß eines Phasenleiters des Netzes mit zwei benachbarten Poleinheiten (A und B, C und D, E und F) verbunden ist.
